# EUROPEAN PATENT APPLICATION

(11) **EP 4 496 094 A1**
(43) Date of publication of application: **22.01.2025**
(21) Application number: 24186678.9
(22) Date of filing: 04.07.2024
(51) Int. Cl.: H01M 50/24, H01M 50/342, H01M 50/367, H01M 10/613, H01M 10/6556, H01M 50/209, H01M 10/647

(54) **BATTERY PACK**

(30) Priority: 21.07.2023 KR 20230095340
(71) Applicant: SAMSUNG SDI CO., LTD., Giheung-gu Yongin-si, Gyeonggi-do 17084 (KR)
(72) Inventor: JEON, Du Seong, 17084 Yongin-si (KR); KIM, Myung Chul, 17084 Yongin-si (KR); KIM, Jeong Ho, 17084 Yongin-si (KR); KIM, Dong Hyeong, 17084 Yongin-si (KR)
(74) Representative: Marks & Clerk LLP

(57) **Abstract**

A battery pack (100) capable of, upon occurrence of an event in a certain battery cell (110), reducing propagation of heat to a cell (110) adjacent thereto and capable of preventing or substantially preventing sagging of a casing is provided. A battery pack includes a plurality of battery cells including vents, each of which is located in a surface of a respective one of the plurality of battery cells, a cover member (150) configured to accommodate the plurality of battery cells (110), and a cooling plate (170), which is located in an area in which the vents are located and is in contact with the cover member (150). The cooling plate (170) includes vent protruding portions (171a) located corresponding to the vents and protruding in a direction opposite the cover member (150).

## Description

### BACKGROUND

### 1. Field

Aspects of embodiments of the present disclosure relate to a battery pack capable of, upon occurrence of a predetermined event in a certain battery cell, reducing propagation of heat to a cell adjacent thereto and capable of preventing sagging of a casing.

### 2. Description of the Related Art

A secondary battery is a battery that is chargeable and dischargeable, unlike a primary battery that is not rechargeable. A low-capacity secondary battery in which one battery cell is packaged in the form of a pack may be used in portable small-sized electronic devices, such as cellular phones and camcorders, and a large-capacity secondary battery in which dozens of battery cells, for example, are connected to each other in a battery pack is widely used as a power source for driving motors in hybrid vehicles and the like.

A secondary battery may be configured such that an electrode assembly, including a positive electrode plate, a negative electrode plate, and a separator interposed therebetween, and an electrolyte are accommodated in a case, and a cap plate is mounted on the case. Representative examples of the electrode assembly may include a wound electrode assembly and a stacked electrode assembly. In such an electrode assembly, an electrode tab may protrude in an upward or lateral direction, and a current collector may be connected to the electrode tab.

A secondary battery has recently been applied to high-output products, such as electric vehicles and energy storage systems (ESSs). In order to produce output required for these products, the secondary battery may be applied to the products in the form of a battery pack constituted by a plurality of battery cells.

The information disclosed in this section is provided for enhancement of understanding of the background of the disclosure and, therefore, it may contain information that does not form the related art.

### SUMMARY

According to an aspect of embodiments of the present disclosure, a battery pack capable of, upon occurrence of an event (e.g., a predetermined event) in a certain battery cell, reducing propagation of heat to a cell adjacent thereto and capable of preventing or substantially preventing sagging of a casing is provided.

According to one or more embodiments of the present disclosure, a battery pack includes a plurality of battery cells including vents, each of which (e.g. each of the vents) is located in a surface of a respective one of the plurality of battery cells, a cover member configured to accommodate the plurality of battery cells, and a cooling plate, which is located in an area in which the vents are located and is in contact with the cover member, wherein the cooling plate includes vent protruding portions located corresponding to the vents and protruding in a direction opposite the cover member.

In one or more embodiments, the vent protruding portions may have a height of 1 mm to 2 mm.

In one or more embodiments, the vent protruding portions may be arranged having a shape corresponding to the vents.

In one or more embodiments, the cooling plate may include holes at positions corresponding to the positions of the vents, and each of the vent protruding portions may protrude along a circumference of a respective one of the holes.

In one or more embodiments, the cooling plate may further include a flange portion configured to surround at least one region around the vent protruding portions.

In one or more embodiments, the flange portion may surround the vent protruding portions along three sides.

In one or more embodiments, the flange portion may expose the vent protruding portions in at least one direction.

In one or more embodiments, the flange portion may protrude higher than the vent protruding portions.

In one or more embodiments, the flange portion may protrude higher than the vent protruding portions by 1 mm to 2 mm.

In one or more embodiments, the battery pack may further include a pack case configured to surround the cover member and the cooling plate.

In one or more embodiments, the cover member may include open holes at positions corresponding to the positions of the vents.

In one or more embodiments, the battery pack may further include a heat blocking member between the plurality of battery cells and the cover member.

In one or more embodiments, the heat blocking member may include a mica sheet.

In one or more embodiments, each of the plurality of battery cells may include a terminal on a side portion thereof on which the cooling plate is not present.

At least some of the above and other features of the invention are set out in the claims.

### BRIEF DESCRIPTION OF THE DRAWINGS

The accompanying drawings, which are incorporated in this specification, illustrate some embodiments and serve to further illustrate the technical ideas of the disclosure in conjunction with the detailed description of embodiments that follows, and the disclosure is not to be construed as limited to what is shown in such drawings. In the drawings:
FIG. 1 is a perspective view showing a state in which a cover is coupled to battery cells in a battery pack according to an embodiment;
FIG. 2 is an exploded perspective view showing a state in which the cover is separated from the battery cells in the battery pack according to an embodiment;
FIG. 3 is an exploded perspective view showing a state in which a cooling plate is separated from the battery cells in the battery pack according to an embodiment;
FIG. 4 is a partial enlarged view showing a state in which the cooling plate is coupled to the battery cells in the battery pack according to an embodiment;
FIG. 5 is a rear perspective view of the cooling plate in the battery pack according to an embodiment; and
FIG. 6 is a partial perspective view of the cooling plate in the battery pack according to an embodiment.

### DETAILED DESCRIPTION

Herein, some example embodiments will be described in further detail with reference to the accompanying drawings.

Some embodiments are provided to more fully illustrate the present disclosure to a person having ordinary skill in the art; however, the following embodiments may be modified in various other forms, and the scope of the disclosure is not limited to the following embodiments. The embodiments are provided to convey the idea of the disclosure fully to those skilled in the art.

In the following drawings, a thickness or size of each layer may be exaggerated for convenience and clarity of description, and same reference symbols in the drawings refer to same or similar elements. As used herein, the term "and/or" includes any one of the enumerated items and any combination of one or more thereof. As used herein, the term "connected" refers not only to a direct connection between members A and B but also to an indirect connection between members A and B with at least one member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof, but do not exclude the presence or addition of one or more other figures, numbers, steps, operations, members, elements, and/or groups thereof.

While terms such as "first" and "second" are used herein to describe various members, parts, regions, layers, and/or portions, the members, the parts, the regions, the layers, and/or the portions are not to be limited by the terms. The terms are used to distinguish one member, one part, one region, one layer, or one portion from another member, another part, another region, another layer, or another portion. Thus, a first member, a first part, a first region, a first layer, or a first portion herein described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below."

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, the configuration of a battery pack according to an embodiment will be described.

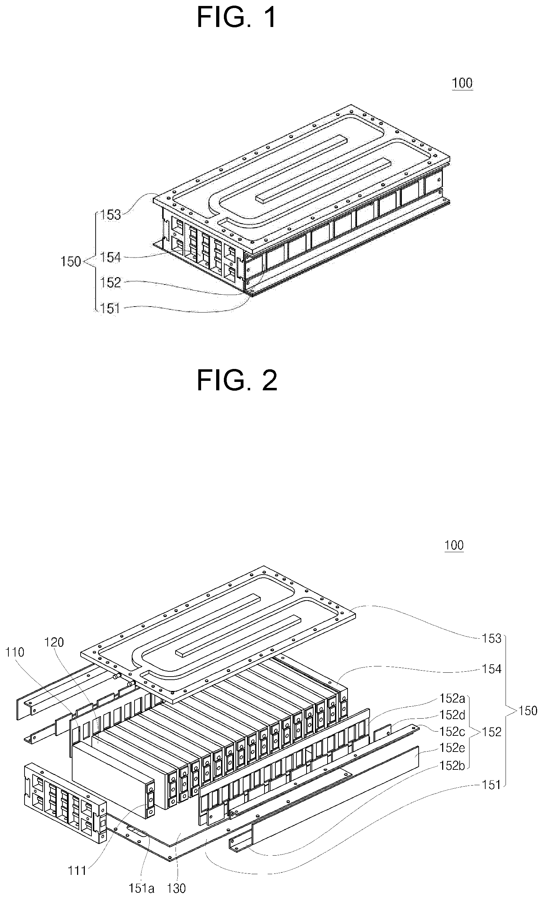

FIG. 1 is a perspective view showing a state in which a cover is coupled to battery cells in a battery pack according to an embodiment; and FIG. 2 is an exploded perspective view showing a state in which the cover is separated from the battery cells in the battery pack according to an embodiment.

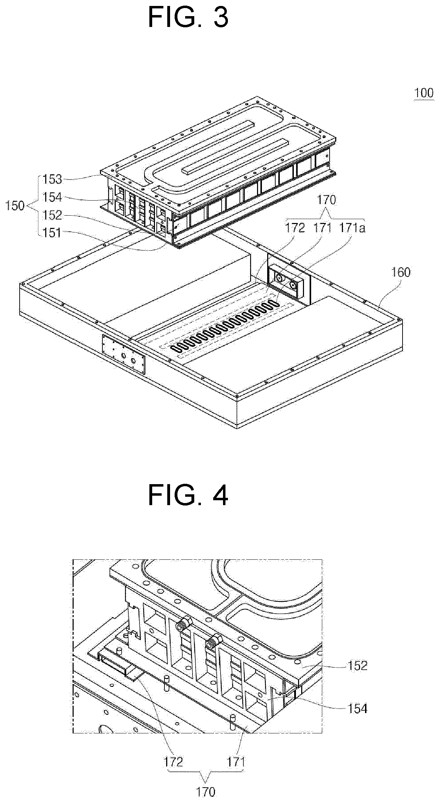

Referring to FIGS. 1 and 2, a battery pack 100 according to an embodiment may include a plurality of battery cells 110, a cover member 150 coupled to the battery cells 110 while covering outer surfaces of the battery cells 110, a pack case 160 (see FIG. 3) coupled to the battery cells 110 through a lower surface of the cover member 150, and a cooling plate 170 (see FIG. 3) located on an inner surface of a lower portion of the pack case 160. In one or more embodiments, the battery pack 100 may further include a spacer 120 interposed between adjacent ones (e.g., every two adjacent ones) of the battery cells 110. In one or more embodiments, the battery pack 100 may further include a heat blocking member 130 interposed between lower surfaces of the battery cells 110 and the cover member 150.

Each of the battery cells 110 may include an electrode assembly provided therein. The electrode assembly may be formed such that a first electrode plate, a separator, and a second electrode plate, each of which is formed in a thin plate shape or a membrane shape, are stacked, or a stack of the first electrode plate, the separator, and the second electrode plate is wound. In some embodiments, the first electrode plate may operate as a negative electrode, and the second electrode plate may operate as a positive electrode. In other embodiments, the first electrode plate may operate as a positive electrode, and the second electrode plate may operate as a negative electrode.

The first electrode plate may be formed by applying a first electrode active material, such as graphite or carbon, to a first electrode current collector formed as a metal foil made of copper or nickel, for example, and may include a first electrode uncoated portion, which is an area to which the first electrode active material is not applied. The first electrode uncoated portion may provide a passage for flow of current between the first electrode plate and the outside.

The second electrode plate may be formed by applying a second electrode active material, such as a transition metal oxide, to a second electrode current collector formed as a metal foil made of aluminium, for example, and may include a second electrode uncoated portion, which is an area to which the second electrode active material is not applied.

The separator may be located between the first electrode plate and the second electrode plate to prevent or substantially prevent a short circuit and enable movement of lithium ions. The separator may be formed as a film made of polyethylene, polypropylene, or a combination thereof.

The electrode assembly may be accommodated in a case together with an electrolyte. The electrolyte may include an organic solvent, such as ethylene carbonate (EC), propylene carbonate (PC), diethyl carbonate (DEC), ethyl methyl carbonate (EMC), or dimethyl carbonate (DMC) and a lithium salt, such as LiPF₆ or LiBF₄.

The case may be sealed by a component such as a cap plate or a side plate. As an example, FIG. 2 illustrates an embodiment in which the case is sealed by a side plate, and electrode terminals 111, which are coupled to the first electrode plate and the second electrode plate, are formed on both, or opposite, sides of the side plate. The electrode terminals 111 may be formed so as to protrude from both, or opposite, sides of the case.

For example, each of the battery cells 110 may include a vent formed in the lower surface thereof. In an embodiment, the vent may be formed to be thinner than other regions of the battery cell 110 and thus may be opened earlier than the other regions of the battery cell 110 if an internal pressure in the battery cell 110 is equal to or higher than a certain pressure (e.g., a reference pressure). The vent may guide internal gas in the battery cell 110 to be discharged to the outside if the internal pressure in the battery cell 110 is equal to or greater than the reference pressure, thereby preventing or substantially preventing an accident, such as an explosion. In one or more embodiments, the battery pack 100 may include structures such as bus bars for electrical connection of the battery pack, which are formed on a side portion or upper portion of the battery pack. In an embodiment, the vent is formed in the lower surface of the battery cell 110, and the structures may not be affected by opening of the vent of the battery cell 110.

The spacer 120 may be disposed between adjacent ones (e.g., every two adjacent ones) of the battery cells 110. The spacer 120 may allow adjacent battery cells 110 to be electrically isolated from each other and to block propagation of heat from a battery cell 110 to another battery cell 110 adjacent thereto. The spacer 120 may be implemented as a thermally insulative sheet. For example, the spacer 120 may be implemented as a sheet of ceramic paper or a mica sheet.

The heat blocking member 130 may be formed on the lower surfaces of the battery cells 110. The heat blocking member 130 may be formed on the lower surfaces of the battery cells 110 in which the vents are formed. If the vent of any of the battery cells 110 is opened, a high-temperature substance may be discharged out of the corresponding battery cell 110. If this high-temperature substance scatters to a neighboring battery cell 110, for example, onto the vent of a neighboring battery cell 110, which is vulnerable to heat, the vent of the neighboring battery cell 110 may be opened. This may cause a problem in which an event occurring in a certain battery cell 110 propagates to another battery cell 110 adjacent thereto. In an embodiment, because the heat blocking member 130 covers the outer sides of the lower surfaces of the battery cells 110 in which the vents are formed, the heat blocking member 130 may prevent or substantially prevent the high-temperature substance scattering from any of the battery cells 110 from coming into direct contact with another battery cell 110. In one or more embodiments, the heat blocking member 130 may be formed on the outer surfaces of the battery cells 110 so as to cover the vents of the battery cells 110, and thus may protect the vents, which are relatively vulnerable to heat, from the high-temperature scattering substance.

The heat blocking member 130 may block transfer of heat from the high-temperature substance scattering from any of the battery cells 110 to another battery cell 110, and may be formed so as to be opened along with opening of the vent if the vent is operated by the internal pressure in the corresponding battery cell 110. Thus, the heat blocking member 130 may protect the battery cells 110 from the high-temperature scattering substance without disturbing operation of the vents. In an embodiment, the heat blocking member 130 may include, for example, mica.

The cover member 150 may surround the battery cells 110 to protect the battery cells 110 from external impact. In an embodiment, the cover member 150 may include a lower cover member 151 formed under the battery cells 110, side cover members 152 formed along side surfaces of the battery cells 110, an upper cover member 153 formed on the battery cells 110, and end cover members 154 coupled to forwardmost and rearmost battery cells among the battery cells 110. In one or more embodiments, the cover member may be referred to as a plate.

The lower cover member 151 may be formed on an outer surface of the heat blocking member 130, for example, a lower surface of the heat blocking member 130. The lower cover member 151 may provide mechanical rigidity to the outer surface of the heat blocking member 130. The lower cover member 151 may prevent or substantially prevent the battery cells 110 from melting or rupturing.

In one or more embodiments, the lower cover member 151 may include open holes 151a formed in regions thereof corresponding to the vents of the battery cells 110. Because the vents do not interfere with the lower cover member 151 due to the open holes 151a in the lower cover member 151, operation of the vents of the battery cells 110 may not be disturbed or impeded.

In one or more embodiments, the lower cover member 151 may be formed such that only regions thereof corresponding to the vents of the battery cells 110 are open. Thus, even if the vents formed in the lower surfaces of the battery cells 110 are opened, the lower cover member 151 may prevent or substantially prevent the electrode assembly from escaping downwardly. The lower cover member 151 may prevent or substantially prevent heat propagation by preventing or substantially preventing escape of the high-temperature electrode assembly upon occurrence of an event.

As will be described below, the cooling plate 170 may be coupled to the lower surface of the lower cover member 151 in order to allow heat generated in the battery cells 110 to be dissipated through the lower surface of the lower cover member 151.

The side cover members 152 may be located on the lower cover member 151 and may be coupled to both, or opposite, side surfaces of the battery cells 110. Through this configuration, the side cover members 152 may protect the battery cells 110 and may allow the battery cells 110 to be electrically connected to each other.

In an embodiment, each of the side cover members 152 may include a side frame 152a formed along the side surfaces of the battery cells 110 in an arrangement direction of the battery cells 110, a lower coupling frame 152b coupled to a lower side of the side frame 152a and coupled to the lower cover member 151 and the heat blocking member 130, and an upper coupling frame 152c coupled to an upper side of the side frame 152a and coupled to the upper cover member 153. In one or more embodiments, each of the side cover members 152 may further include a plurality of bus bars 152d, which are coupled to a side portion of the side frame 152a and electrically connect the electrode terminals 111 of the battery cells 110 exposed through the side frame 152a to each other, and an insulating cover 152e, which is coupled to outer surfaces of the bus bars 152d to cover the bus bars 152d.

The upper cover member 153 may be coupled to the side cover members 152 and may be formed on surfaces of the battery cells 110, for example, the upper surfaces of the battery cells 110. For example, the upper cover member 153 may dissipate heat from the battery cells 110 in a state of being in contact with the upper surfaces of the battery cells 110. For example, the upper cover member 153 may have an air-cooling structure. In an embodiment, the upper cover member 153 may include heat dissipation fins.

The end cover members 154 may be coupled to the forwardmost and rearmost battery cells among the battery cells 110. The end cover members 154 may be coupled to the lower cover member 151, the side cover members 152, and the upper cover member 153, and the battery cells 110 may be accommodated in an internal space defined by the cover members 151, 152, 153, and 154.

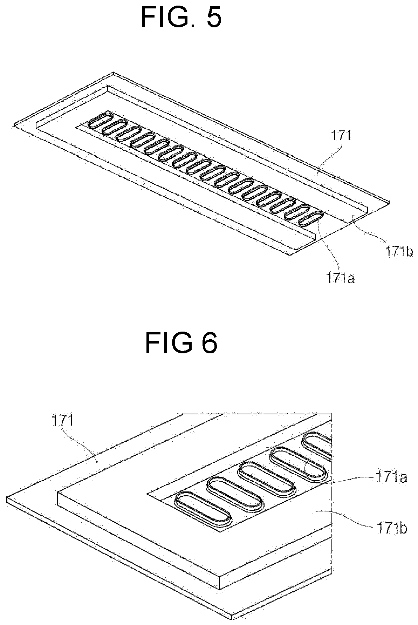

FIG. 3 is an exploded perspective view showing a state in which the cooling plate is separated from the battery cells in the battery pack according to an embodiment; FIG. 4 is a partial enlarged view showing a state in which the cooling plate is coupled to the battery cells in the battery pack according to an embodiment; FIG. 5 is a rear perspective view of the cooling plate in the battery pack according to an embodiment; and FIG. 6 is a partial perspective view of the cooling plate in the battery pack according to an embodiment.

Referring to FIG. 3, the pack case 160 may be coupled to the lower surface of the cover member 150 and may cover the side surfaces and lower surface of the cover member 150. Through this configuration, the pack case 160 may accommodate the battery cells 110 coupled to the cover member 150. As an example, FIG. 3 illustrates an embodiment in which the cover member 150 is coupled to a central region of the pack case 160. In other embodiments, a plurality of cover members 150 may be accommodated in the pack case 160, or other electronic components and the cover member 150 may be accommodated together in the pack case 160. The pack case 160 may protect the cover member 150 and the battery cells 110 accommodated therein and may connect the battery pack 100 to the outside.

Referring to FIGS. 3 and 4, the cooling plate 170 may be located on the inner surface of the lower portion of the pack case 160. The cooling plate 170 may be in contact with the lower surface of the cover member 150 and may be thermally coupled to the battery cells 110 located inside the cover member 150. The cooling plate 170 may dissipate heat from the battery cells 110 in a state of being in contact with the lower surfaces of the battery cells 110. In an embodiment, a cooling type of the cooling plate 170 may be an air-cooling type or a water-cooling type. In an embodiment, if the cooling type of the cooling plate 170 is a water-cooling type, heat generated in the battery cells 110 may be dissipated to the outside through a refrigerant provided in the cooling plate 170.

The cooling plate 170 may include a plate portion 171 and a fastening portion 172 that secures an edge of the plate portion 171 to the bottom surface of the pack case 160.

Referring to FIGS. 3 to 6, in an embodiment, the plate portion 171 may be formed as a flat plate having a substantially rectangular shape. The plate portion 171 may support the cover member 150 seated on an upper surface thereof. In some embodiments, the plate portion 171 may accommodate a refrigerant therein to dissipate heat transferred thereto through the cover member 150 to the outside, thereby cooling the battery cells 110 provided inside the cover member 150.

In an embodiment, the plate portion 171 may include vent protruding portions 171a formed in an approximately central region in a width direction thereof at positions corresponding to the positions of the vents of the battery cells 110 and a flange portion 171b formed along peripheries of the vent protruding portions 171a so as to protrude downward from the lower surface of the plate portion 171.

Holes corresponding to the vents may be formed in the respective vent protruding portions 171a, and the vent protruding portions 171a may be formed along the circumferences of the holes so as to protrude downward from the plate portion 171. Such vent protruding portions 171a may provide rigidity to regions around the vents of the battery cells 110. The vent protruding portions 171a may protrude downward along the peripheries of the vents, which have a relatively small thickness compared to the other regions of the battery cells 110, thereby protecting the vents from external force applied to the vents. The vent protruding portions 171a may expose the vents through the holes formed therein, and thus may not disturb or impede operation of the vents, for example, opening of the vents to allow gases in the battery cells to be discharged to the outside through the vents upon occurrence of an event. In an embodiment, the vent protruding portions 171a may be formed to have a height of about 1 mm to about 2 mm. If the height of the vent protruding portions 171a is equal to or greater than 1 mm, it may be possible to secure rigidity required to protect the vents, and if the height of the vent protruding portions 171a is equal to or less than 2 mm, it may be suitable for reduction of an overall weight of the battery pack 100.

The flange portion 171b may be formed on the lower surface of the plate portion 171. Through this shape, the flange portion 171b may increase overall rigidity of the cooling plate 170 and may prevent or substantially prevent sagging of the cooling plate 170. In an embodiment, a height of the flange portion 171b may be greater than the height of the vent protruding portions 171a by 1 mm to 2 mm.

If the height of the flange portion 171b is greater than the height of the vent protruding portions 171a by 1 mm or greater, it may be suitable for reduction of the overall weight of the battery pack 100. If the height of the flange portion 171b is greater than the height of the vent protruding portions 171a by 2 mm or less, it may be possible to secure a sufficient space through which gases in the battery cells 110 may flow.

In one or more embodiments, the flange portion 171b may be formed to be bent in a substantially U-shape along the peripheries of the vent protruding portions 171a formed on the plate portion 171 so as to surround the vent protruding portions 171a on three sides, or from three directions. If the vents of the battery cells 110 are opened and gases in the battery cells 110 are discharged therefrom, the gases may first pass through the vent protruding portions 171a, may move along the U-shaped flange portion 171b, and then may be discharged to the outside of the battery pack 100 through an open side of the flange portion 171b. The flange portion 171b may not only secure rigidity of the battery pack 100, but may also facilitate safe gas discharge by guiding movement of gases upon occurrence of an event in the battery cells 110.

As described above, in the battery pack 100 according to one or more embodiments, the cooling plate 170, which is in contact with the lower surface of the cover member 150 accommodating the battery cells 100, may include the vent protruding portions 171a formed corresponding to the vents of the battery cells 110 and the flange portion 171b formed so as to surround at least one region around the vent protruding portions 171a, thereby securing the rigidity of the cooling plate 170 and guiding gases generated upon occurrence of an event to smoothly or easily move through the vents.

As will be apparent from the above description, a battery pack according to an embodiment may include a cooling plate provided so as to be in contact with the lower surface of a cover member accommodating battery cells, and the cooling plate may include vent protruding portions formed corresponding to vents of the battery cells and a flange portion formed so as to surround at least one region around the vent protruding portions, thereby securing rigidity of the cooling plate and guiding gases generated upon occurrence of an event to smoothly or easily move through the vents.

While an embodiment for implementing a battery pack according to the present disclosure has been described above, the present disclosure is not limited to the above embodiment, and it is to be understood by those skilled in the art that various modifications can be made without departing from the scope of the disclosure as set forth in the claims.

## Claims

1. A battery pack comprising:
a plurality of battery cells comprising vents, each of the vents being located in a surface of a respective one of the plurality of battery cells;
a cover member configured to accommodate the plurality of battery cells; and
a cooling plate located in an area in which the vents are located, the cooling plate being in contact with the cover member,
wherein the cooling plate comprises vent protruding portions located corresponding to the vents and protruding in a direction opposite the cover member.

2. The battery pack as claimed in claim 1, wherein the vent protruding portions have a height of 1 mm to 2 mm.

3. The battery pack as claimed in claim 1 or claim 2, wherein the vent protruding portions are arranged having a shape corresponding to the vents.

4. The battery pack as claimed in any one of claims 1 to 3, wherein the cooling plate comprises holes at positions corresponding to positions of the vents, and
wherein each of the vent protruding portions protrudes along a circumference of a respective one of the holes.

5. The battery pack as claimed in any one of claims 1 to 4, wherein the cooling plate further comprises a flange portion configured to surround at least a region around the vent protruding portions.

6. The battery pack as claimed in claim 5, wherein the flange portion surrounds the vent protruding portions along three sides.

7. The battery pack as claimed in claim 5 or claim 6, wherein the flange portion exposes the vent protruding portions in at least one direction.

8. The battery pack as claimed in any one of claims 5 to 7, wherein the flange portion protrudes higher than the vent protruding portions.

9. The battery pack as claimed in any one of claims 5 to 8, wherein the flange portion protrudes higher than the vent protruding portions by 1 mm to 2 mm.

10. The battery pack as claimed in any one of claims 1 to 9, further comprising a pack case configured to surround the cover member and the cooling plate.

11. The battery pack as claimed in any one of claims 1 to 10, wherein the cover member comprises open holes at positions corresponding to positions of the vents.

12. The battery pack as claimed in any one of claims 1 to 11, further comprising a heat blocking member between the plurality of battery cells and the cover member.

13. The battery pack as claimed in claim 12, wherein the heat blocking member comprises a mica sheet.

14. The battery pack as claimed in any one of claims 1 to 13, wherein each of the plurality of battery cells comprises a terminal located on a side portion thereof on which the cooling plate is not present.
